# EUROPÄISCHE PATENTSCHRIFT

(11) **EP 2 313 669 B1**
(45) Veröffentlichungstag und Bekanntmachung des Hinweises auf die Patenterteilung: **21.12.2011**
(21) Anmeldenummer: 09780349.8
(22) Anmeldetag: 09.07.2009
(51) Int. Cl.: F16H 59/70

(54) **GETRIEBE**
TRANSMISSION
TRANSMISSION

(30) Priorität: 20.08.2008 DE 102008041398
(43) Veröffentlichungstag der Anmeldung: 27.04.2011
(73) Patentinhaber: ZF Friedrichshafen AG, 88038 Friedrichshafen (DE)
(72) Erfinder: STEINBORN, Mario, 88046 Friedrichshafen (DE); REITH, Ulrich, 88281 Schlier (DE)
(86) Internationale Anmeldenummer: PCT/EP2009/058714
(87) Internationale Veröffentlichungsnummer: WO 2010/020472

(56) Entgegenhaltungen:
- DE-A1- 10 306 641
- DE-A1-102005 034 864
- DE-A1-102006 018 313
- DE-A1-102006 018 314
- US-B1- 6 736 024

## Beschreibung

Die Erfindung betrifft ein Getriebe, insbesondere ein automatisiertes Schaltgetriebe, nach dem Oberbegriff des Anspruchs 1.

Aus der DE 10 2006 018 313 A1 ist ein Verfahren bekannt, mit welchem an einer Schaltgruppe eines automatisierten Schaltgetriebes die Position eines Schaltelements, nämlich einer Schaltmuffe, indirekt ohne speziellen Sensor dadurch gemessen werden kann, dass die Durchbiegung einer mit einer Schaltschiene und der Schaltmuffe zusammenwirkende Schaltgabel ermittelt wird. Aus der DE 10 2006 018 314 A1 ist ein Verfahren bekannt, um einen Betätigungsdruck eines Betätigungsmittels der Schaltschiene zu bestimmen.

Hiervon ausgehend liegt der vorliegenden Erfindung das Problem zu Grunde, ein neuartiges Getriebe zu schaffen. Dieses Problem wird durch ein Getriebe gemäß Anspruch 1 gelöst. Erfindungsgemäß ist der Schaltschiene der oder jeder Schaltgruppe jeweils ein zusammen mit der jeweiligen Schaltschiene relativ zu einem entsprechenden Messwertaufnehmer verlagerbarer Sensor zugeordnet, wobei im Bereich mindestens einer Schaltgruppe einerseits eine erste Relativposition zwischen Messwertaufnehmer und Sensor in Betätigungsrichtung der jeweiligen Schaltschiene und andererseits eine zweite Relativposition zwischen Messwertaufnehmer und Sensor senkrecht zur Betätigungsrichtung der jeweiligen Schaltschiene erfassbar ist, und wobei eine Auswerteinrichtung aus der zweiten Relativposition Systemzustände der jeweiligen Schaltgruppe ableitet.

Beim erfindungsgemäßen Getriebe ist es möglich, aus der zweiten Relativposition zwischen dem Messwertaufnehmer und dem Sensor einer Schaltgruppe, die senkrecht zur Betätigungsrichtung der jeweiligen Schaltschiene erfasst wird, Systemzustände der jeweiligen Schaltgruppe und damit Systemzustände des Getriebes abzuleiten.

Beim efindungsgemäßen Getriebe wird demnach nicht nur die erste Relativposition zwischen dem Messwertaufnehmer und dem Sensor einer Schaltgruppe in Betätigungsrichtung erfasst und ausgewertet, sondern vielmehr auch die zweite Relativposition senkrecht zur Betätigungsrichtung, um so Informationen über den Systemzustand des Getriebes zu erhalten. Diese Informationen können dazu genutzt werden, um Schaltzustände und/oder Schaltabläufe in der jeweiligen Schaltgruppe und damit im Getriebe zu bewerten und/oder zu adaptieren und/oder zu steuern und/oder zu regeln. Hierdurch wird eine völlig neue Funktionalität eines Getriebes eines Kraftfahrzeugs bereitgestellt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine stark schematisierte Darstellung eines Getriebes mit drei Schaltgruppen in Draufsicht, und
- Fig. 2: eine Schaltgruppe des Getriebes der Fig. 1 in Seitenansicht.

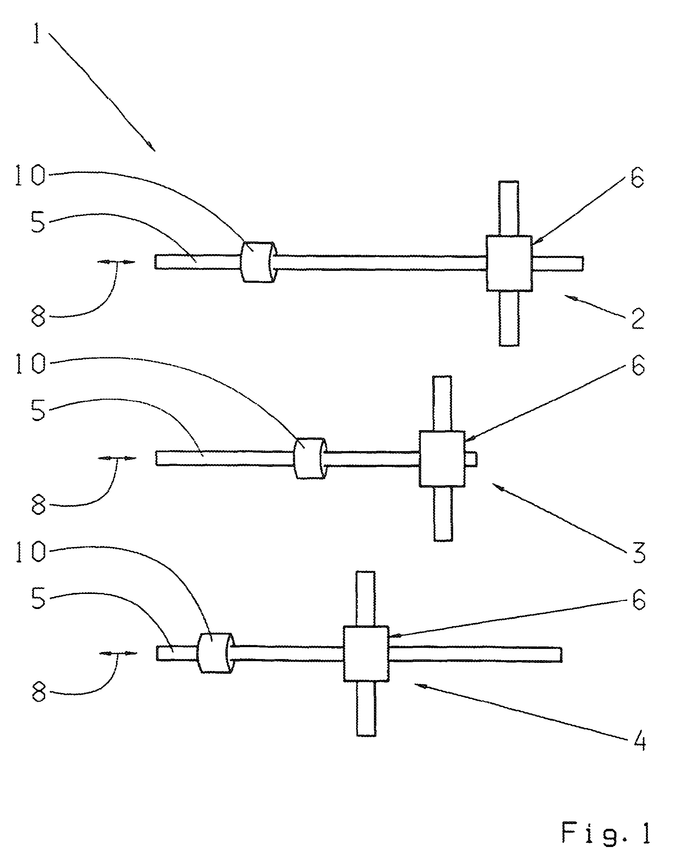

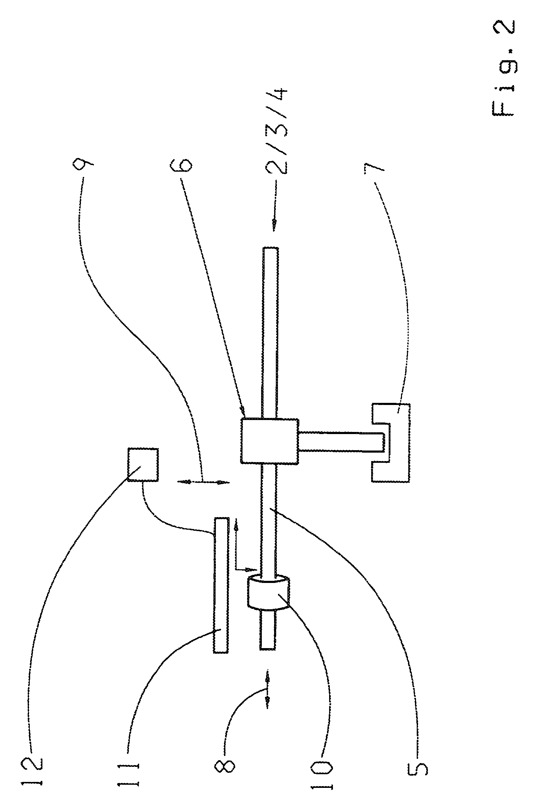

Die hier vorliegende Erfindung betrifft ein Getriebe eines Kraftfahrzeugs mit mindestens einer Schaltgruppe. Die Erfindung wird nachfolgend unter Bezugnahme auf das Ausführungsbeispiel der Fig. 1 und 2 am Beispiel eines als automatisiertes Schaltgetriebe ausgebildeten Getriebes 1 im Detail beschrieben, wobei das Getriebe 1 gemäß Fig. 1 insgesamt drei Schaltgruppen 2, 3 und 4 umfasst. Fig. 2 zeigt eine derartige Schattgruppe 2 bzw. 3 bzw. 4 in Seitenansicht. Bei der Schaltgruppe 2 kann es sich um eine Hauptschaltgruppe, bei der Schaltgruppe 3 um eine Splitterschaltgruppe und bei der Schaltgruppe 4 um eine Rangeschaltgruppe eines sogenannten Gruppenschaltgetriebes handeln.

Jede der Schaftgruppen 2, 3 und 4 verfügt über eine Schaltschiene 5, an der eine Schaltgabel 6 angreift, wobei die Schaltgabel 6 mit einem Schaltelement 7, insbesondere einer Schaltmuffe, zusammenwirkt. Die Schaltschiene 5 jeder Schaftgruppe 2, 3, 4 ist von jeweils einem nicht gezeigten Betätigungselement betätigbar und damit in Richtung einer Betätigungsrichtung 8 translatorisch verlagerbar, wobei die translatorische Verlagerung der Schaltschiene 5 einer jeden Schattgruppe 2, 3, 4 über die jeweilige Schaltgabel 6 auf das entsprechende Schaltelement 7 umgesetzt wird. Hierbei kann die Schaltgabel 6 der jeweiligen Schaltgruppe 2, 3, 4 senkrecht zur Betätigungsrichtung 8 einer Verformung unterliegen, also entlang einer senkrecht zur Betätigungsrichtung 8 verlaufenden Verformungsrichtung 9.

Der Schaftschiene 5 einer jeden Schaltgruppe 2, 3 und 4 ist ein Sensor 10 zugeordnet, wobei der Sensor 10 mit der Schattschiene 5 der jeweiligen Schattgruppe 2, 3 und 4 fest verbunden ist und demnach zusammen mit der Schaltschiene 5 relativ zu einem entsprechenden Messwertaufnehmer 11 der jeweiligen Schaltgruppe 2, 3, 4 (siehe Fig. 2) verlagerbar ist.

Im bevorzugten Ausführungsbeispiel ist im Bereich jeder Schaltgruppe 2, 3, 4 des Getriebes 1 einerseits eine erste Relativposition zwischen dem Messwertaufnehmer 11 und dem Sensor 10 in Betätigungsrichtung 8 der jeweiligen Schaltschiene 5 und andererseits eine zweite Relativposition zwischen dem Messwertaufnehmer 11 und dem Sensor 10 senkrecht zur Betätigungsrichtung 8 und damit in Verformungsrichtung 9 der jeweiligen Schaltschiene 5 erfassbar.

Eine Auswerteinrichtung 12 ermittelt zumindest aus der zweiten Relativposition des Sensors 10 zum Messwertaufnehmer 11 der jeweiligen Schaltgruppe 2, 3 bzw. 4, also zumindest aus der Relativposition senkrecht zur Betätigungsrichtung 8 der Schaltschiene 5, Systemzustände der jeweiligen Schaltgruppe 2, 3 bzw. 4 und damit des Getriebes 1.

Nach einer vorteilhaften Weiterbildung der Erfindung ermittelt die Auswerteinrichtung 12 aus der zweiten Relativposition zwischen dem Sensor 10 und dem Messwertaufnehmer 11 der jeweiligen Schaltgruppe 2, 3 bzw. 4 eine in der jeweiligen Schaltgruppe 2, 3 bzw. 4 auf die jeweilige Schaltschiene 5 wirkende Kraft. So kann z. B. die bei einem Gangeiniegen auf die Schaltschiene 5 der jeweiligen Schaltgruppe 2, 3 bzw. 4 auf die Schaltschiene 5 wirkende Schaltkraft ermittelt werden. Ebenso ist es möglich, die bei einem Gangauslegen auf die jeweilige Schaltschiene 5 der jeweiligen Schaftgruppe 2 bzw. 3 bzw. 4 wirkende Schaltkraft zu vermitteln. Ebenso kann aus der zweiten Relativposition unter Umständen darauf geschlossen werden, dass keine Schaltkräfte auf die Schaltschiene 5 der jeweiligen Schaltgruppe 2, 3 bzw. 4 wirken, dass also die jeweilige Schaltgruppe 2, 3 bzw. 4 kraftfrei ist.

Auf Grundlage der aus der zweiten Relativposition ermittelten, auf die jeweilige Schaltschiene 5 der jeweiligen Schaltgruppe 2, 3 bzw. 4 wirkenden Kraft ist es möglich, dass die Auswerteinrichtung 12 Schaltzustände und/oder Schaltabläufe in der jeweiligen Schaltgruppe 2, 3 bzw. 4 bewertet und/oder adaptiert und/oder steuert und/oder regelt.

So ist es z. B. möglich, auf Grundlage der aus der zweiten Relativposition ermittelten Schaltkraft einen Regelkreis für einen sogenannten Presslufthammereffekt aufzubauen. Reicht z. B. die beim Gangauslegen ermittelte Schaltkraft nicht aus, eine Kupplung eines Getriebes zu öffnen oder zu schließen, so kann über eine Modulation des Betätigungselements der Schaltschiene 5 der jeweiligen Schaltgruppe 2, 3 bzw. 4 der Presslufthammereffekt eingestellt bzw. geregelt werden.

Ferner kann aus der für eine Schaltgruppe 2, 3 bzw. 4 ermittelten, auf die jeweilige Schaltschiene 5 wirkenden Schaltkraft in Verbindung mit der ersten Relativposition der Schaltschiene 5 abgeleitet werden, ob eine Ansteuerung des Schaltelements 7 erfolgreich ist oder nicht.

Wird z. B. an einem Getriebe ein schleichender Ausschaltvorgang für einen Gang detektiert, dieser Vorgang wird auch als Gangwandem bezeichnet, so kann die Auswerteinrichtung 12 entscheiden, ob die entsprechende Kupplung wieder in ihre alle Position gebracht werden kann. Verbiegt sich die Schaltschiene 5 in Verformungsrichtung 9 ohne messbare Positionsänderung in Betätigungsrichtung 8, ist also eine Veränderung der zweiten Relativposition ohne Veränderung der ersten Relativposition feststellbar, so kann daraus geschlossen werden, dass eine weitere Ansteuerung der Schaltschiene 5 unter gleichen Rahsveenbedingungen keinen Sinn macht. So kann dann die Auswerteinrichtung 12 z. B. entscheiden, das wirksame Motormoment und damit die Verspannung im Antriebsstrang zu reduzieren, um so die entsprechende Kupplung wieder in ihre alte Position zu überführen und damit dem Gangwandern entgegenzuwirken. Ebenso kann die Auswerteinrichtung 12 entscheiden, auf einen Lastwechsel im Antriebsstrang zu warten, bevor sie die Schaltschiene 5 der jeweiligen Schaltgruppe 2, 3 bzw. 4 erneut ansteuert.

Unter Kenntnis der aus der zweiten Relativposition ermittelten, auf die Schaltschiene 5 der jeweiligen Schaltgruppe 2, 3 bzw. 4 ermittelten Schaltkraft und der entsprechenden ersten Relativposition können weiterhin Adaptionsgrößen für Schaltabläufe berechnet und auf ihre Wirksamkeit überprüft werden. Sollen z. B. große Stöße auf Anschläge der Schaltschiene 5 einer Schaltgruppe 2 bzw. 3 bzw. 4 verhindert werden, so kann durch gezieltes Befüllen einer Zylindergegenseite eines als Betätigungszylinder ausgebildeten Betätigungselements der entsprechenden Schaltschiene 5 ein Polster aufgebaut werden.

Bei zu starker Befüllung der Zylindergegenseite des Betätigungselements erhöht sich dann die Schaltzeit. Wird die Zylindergegenseite zu wenig befüllt, so ist das Polster nicht effektiv.

Aus den aus der zweiten Relativposition ermittelten Schaftkräften lässt sich die Effizienz des in der Zylindergegenseite des Betätigungselements aufgebauten Polsters beurteilen. In Abhängigkeit dieser Beurteilung kann dann eine Ansteuersequenz für die Zylindergegenseite verändert oder beibehalten werden.

Ferner ist es möglich, dass die Auswerteinrichtung 12 eine zeitliche Ableitung der ersten Relativposition und/oder der zweiten Relativposition bildet und hieraus die Schaltqualität beurteilt. Ferner kann die Auswerteinrichtung 12 eine zeitliche Ableitung der zeitlichen Änderung der ersten Relativposition und/oder der zweiten Relativposition bilden, um die Schaltqualität zu beurteilen und gegebenenfalls zu adaptieren.

Nach einer weiteren vorteilhaften Weiterbildung der Erfindung ermittelt die Auswerteinrichtung 12 aus der zweiten Relativposition des Sensors 10 zum Messwertaufnehmer 11 ein in der jeweiligen Schaltgruppe 2, 3 bzw. 4 auf die jeweilige Schaltschiene 5 wirkendes Drehmoment. In einem Getriebe sind, wie in Fig. 1 gezeigt, typischerweise mehrere Schaltschienen 5 verbaut. Es sind mehrere Sensoren 10 zur Positionsbestimmung der einzelnen Schaltschienen 5 vorhanden. Dann, wenn keine Kräfte auf die Schaltschienen 5 wirken, und dennoch eine Änderung der zweiten Relativpositionen messbar ist, so kann hieraus auf eine Verwindung eines unter einer Drehmomentbelastung stehenden Gehäuses des Getriebes geschlossen werden. Die Änderungen der zweiten Relativpositionen sind dann ein Maß für das im Antriebsstrang wirkende Drehmoment.

Nach einer weiteren vorteilhaften Weiterbildung ist es möglich, aus der zweiten Relativposition auf eine Drehrichtung einer Ausgangswelle des Getriebes 1 und/oder auf eine Fahrtrichtung des Kraftfahrzeugs zu schließen. Je nach Drehrichtung einer Ausgangswelle des Getriebes wirken andere Kräfte auf das Getriebegehäuse.

Neben dem Drehmoment kann aus der zweiten Relativposition weiterhin auch die Drehrichtung der Getriebeausgangswelle bzw. die Fahrtrichtung des Kraftfahrzeugs geschlossen werden. Durch Erfassung und Auswertung der zweiten Relativposition zwischen Sensor 10 und Messwertaufnehmer 11 der jeweiligen Schaltgruppe 2, 3 bzw. 4 kann auf eine Vielzahl weiterer Systemzustände im Getriebe 1 geschlossen werden.

So ist z. B. eine Anschlagverschleißerkennung realisierbar. Um eine Anschlagposition ermitteln zu können, muss das entsprechende Schaltelement 7 bzw. die Schaltschiene 5 mit einer definierten Kraft gegen einen Anschlag gefahren werden. Durch Erfassung dieser Kraft lassen sich reproduzierbare Verhältnisse realisieren. Weiterhin kann ein Verschleiß des entsprechenden Anschlags der Schaltschiene 5 bzw. des Schaltelements 7 ermittelt werden.

Ferner können Schwingungen im Antriebsstrang erkannt werden. Werden bei nicht betätigten Schaltschienen 5 sich periodisch wiederholende Abstandsänderungen in der zweiten Relativposition registriert, so kann auf Schwingungen im Antriebsstrang geschlossen werden. Die Auswerteineinheit 12 kann dann zur Schwingungsreduzierung Gegenmaßnahmen einleiten, z. B. durch Veränderung der Ansteuerung einer Kupplung.

Weiterhin ist es möglich, dass die Auswerteinrichtung 12 eine Restlebensdauer von Komponenten des Getriebes 1, so z. B. eines Lagers für die Schaltschienen 5 der Schaltgruppen 2, 3 bzw. 4, errechnet. Derartige gewonnene Erkenntnisse können dann bei einer Neukonstruktion von Getrieben zu einer Optimierung der Dimensionierung von Komponenten des Getriebes, so z.B. von Kupplungen, Schaltschienen, Lagern, Gehäusen, Betätigungszylinder, Antriebsmotoren und dergleichen, verwendet werden.

Als weiteren Systemzustand kann die Auswerteinrichtung 12 z. B. ein sogenanntes Getrieberatschen erkennen. Ratscht ein Getriebe beim Einlegen eines Gangs, so werden Schwingungen auf die entsprechende Schaltschiene 5 der jeweiligen Schaltgruppe 2, 3 bzw. 4 übertragen. Registriert die Auswerteinrichtung 12 Schwingungen in der zweiten Relativposition, so kann dieselbe auf ein Getrieberatschen schließen, Gegenmaßnahmen ergreifen oder eine Fehlermeldung generieren. Aus den Schwingungsamplituden kann die Auswerteinrichtung 12 auf den Verschleißzustand von Schaltklauen jeglicher Form, z. B. Schrägklauen, Spitzklauen, Rundklauen und dergleichen, schließen.

Es ist auch möglich, dass die Auswerteinrichtung 12 aus der zweiten Relativposition eine sogenannte Zahn-auf-Zahn-Stellung im Getriebe 1 erkennt. Befindet sich z. B. ein Schaltelement 7 nicht im Bereich eines Anschlags, ist der Antriebsstrang nahezu drehmomentfrei und wird aus der zweiten Relativposition auf eine Schaltkraft geschlossen, die größer als ein vorgegebener Mindestwert ist, so kann auf eine Zahn-auf-Zahn-Stellung an einem unsynchronisierten Schaltelement geschlossen werden. Bei einem synchronisierten Schaltelement kann in dieser Situation ebenfalls auf eine Zahn-auf-Zahn-Stellung oder auf einen Synchronisiervorgang geschlossen werden. Ist ein Synchronisiervorgang abgeschlossen, so liegt in diesem Fall immer eine Zahn-auf-Zahn-Stellung vor.

Ferner ist es möglich, dass die Auswerteinrichtung 12 aus der zweiten Relativposition auf eine Verklemmung von Schaltelementen schließt. Befindet sich z. B. ein Schaltelement 7 oder eine Schaltschiene 5 einer Schaltgruppe 2, 3 bzw. 4 im Bereich eines Anschlags, der Antriebsstrang ist jedoch nicht drehmomentfrei oder es liegen Antriebsstrangschwingungen vor und es kann eine Schaltkraft größer als ein vorgegebener Mindestwert aus der zweiten Relativposition ermittelt werden, so kann auf eine Verklemmung von Schaltelementen oder auf eine Zahn-auf-Zahn-Stellung geschlossen werden, wobei dann, wenn die ermittelte Position außerhalb einer typischen Zahn-auf-Zahn-Stellung liegt, eine Verklemmung des Schaltelements vorliegt.

Weiterhin kann die Auswerteinrichtung 12 als Systemzustand des Getriebes 1 die Verbindung zwischen Schaltschiene 5 und Schaltgabel 6 der jeweiligen Schaltgruppe 2, 3 bzw. 4 beurteilen. Ist nämlich die Verbindung zwischen Schaltschiene 5 und Schaltgabel 6 nicht funktionstüchtig, so bewegt sich bei Beaufschlagung eines der Schaltschiene 5 zugeordneten Betätigungseinrichtung zwar die Schaltschiene 5, die Schaltgabel 6 folgt dieser Betätigung jedoch nicht oder nur bedingt. In diesem Fall stützt sich dann die Schaltgabel 6 an Gleitsteinen nur bedingt oder gar nicht ab, so dass dann die Schaltschiene 5 nicht in dem Maß durchgebogen würde, wie dies bei einer funktionstüchtigen Verbindung zwischen Schaltschiene 5 und Schaltgabel 6 der Fall wäre. Aus einer unter diesen Bedingungen abweichenden zweiten Relativposition zwischen Sensor 10 und Messwertaufnehmer 11 kann demnach auf eine nicht funktionstüchtige Verbindung zwischen Schaltschiene 5 und Schaltgabel 6 geschlossen werden.

Darüber hinaus ist es möglich, dass die Auswerteinrichtung 12 aus der zweiten Relativposition zwischen Sensor 10 und Messwertaufnehmer 11 einen Effektivwert an einem Eingriffspunkt der Schaltgabel 6 der jeweiligen Schaltgruppe 2, 3 bzw. 4 ermittelt. Aus einer aus der zweiten Relativposition ermittelten Schaltkraft kann zusammen mit einer aus der ersten Relativposition ermittelten Weginformation der Schaltschiene 5 und/oder der Schaltgabel 6 der jeweiligen Schaltgruppe 2, 3 bzw. 4 der Effektivweg des Eingriffspunkts der Schaltgabel 6 berechnet werden. Aus der Kenntnis dieses Effektivwegs kann dann mit kleineren bzw. dünneren Schaltelementen gearbeitet werden, als dies bislang bei Getrieben üblich ist. Außerdem kann auf Totwege und Überdeckungen verzichtet werden. Diese sind bei aus der Praxis bekannten Getrieben aus Unkenntnis des Effektivwegs aus Sicherheitsgründen erforderlich. Auf Grundlage des so ermittelten Effektivwegs lässt sich darüber hinaus eine Verschleißerkennung der Schaltelemente realisieren.

Dann, wenn Funktionalitäten des Getriebes, wie z. B. eine Istgangerkennung, auf dem Effektivweg beruhen, können bislang erforderliche Toleranzen und Hysteresen vermieden werden.

Aus dem aus der zweiten Relativposition der jeweiligen Schaltgruppe 2, 3 bzw. 4 ermittelten Effektivweg oder aus den entsprechend ermittelten Schaltkräften können Getriebegeometrien gelernt und adaptiert werden.

Ferner ist es möglich, dass die Auswerteinrichtung 12 unter Verwendung der jeweiligen zweiten Relativposition der jeweiligen Schaltgruppe 2, 3 und 4 Getriebemodelle parametrisiert. So ist es z. B. möglich, das Verhalten von Schaltelementen des Getriebes unter Verwendung mathematischer Modelle zu simulieren. Hierbei wird davon ausgegangen, dass sich alle beteiligten Komponenten immer gleich und spezifikationskonform verhalten. Mit der Erfindung lassen sich, wie oben dargelegt, eine Vielzahl von Systemzuständen des Getriebes 1 ermitteln bzw. ableiten, auf Grundlage derer die mathematischen Modelle des Getriebes parametrisiert werden können, um so eine genauere Simulation von Komponenten des Getriebes zu ermöglichen.

Weiterhin ist es möglich, aus ermittelten Schaltkräften beim Gangeinlegen und Gangauslegen Motoraufhängungspunkte und Getriebeaufhängungspunkte des Kraftfahrzeugs zu diagnostizieren. Wirken z. B. keine Schaltkräfte auf die Schaltschienen 5, ist dennoch eine Änderung der zweiten Relativpositionen messbar, so liegt dies an einer Verwindung des unter Drehmomentbelastung stehenden Gehäuses des Getriebes. Diese Änderung der zweiten Relativposition ist also, wie bereits oben ausgeführt, ein Maß für das im Antriebsstrang wirkende Drehmoment. Die Verwindung des Getriebegehäuses hängt jedoch von der Getriebeaufhängung ab. Ändert sich das Verwindungsverhalten des Getriebegehäuses, so kann auf eine Veränderung der Getriebeaufhängung geschlossen werden.

Aus Kenntnis der zweiten Relativposition des Sensors 10 zum Messwertaufnehmer 11 der jeweiligen Schaltgruppe 2, 3 bzw. 4 kann demnach die Auswerteinrichtung 12 auf eine Vielzahl unterschiedlicher Systemzustände der jeweiligen Schaltgruppe und damit des Getriebes 1 schließen.

### Bezugszeichen

- 1: Getriebe
- 2: Schaltgruppe
- 3: Schaltgruppe
- 4: Schaltgruppe
- 5: Schaltschiene
- 6: Schaltgabel
- 7: Schaltelement
- 8: Betätigungsrichtung
- 9: Verformungsrichtung
- 10: Sensor
- 11: Messwertaufnehmer
- 12: Auswerteineinrichtung

## Patentansprüche

1. Getriebe, insbesondere automatisiertes Schaltgetriebe, eines Kraftfahrzeugs, mit mindestens einer Schaltgruppe, wobei die oder jede Schaltgruppe jeweils eine Schaltschiene umfasst, die eine mit einem Schaltelement, insbesondere mit einer Schaltmuffe, zusammenwirkende Schaltgabel der jeweiligen Schaltgruppe betätigt, **dadurch gekennzeichnet , dass** der Schaltschiene (5) der oder jeder Schaltgruppe (2, 3, 4) jeweils ein zusammen mit der jeweiligen Schaltschiene (5) relativ zu einem entsprechenden Messwertaufnehmer (11) verlagerbarer Sensor (10) zugeordnet ist, wobei im Bereich mindestens einer Schaltgruppe (2, 3, 4) einerseits eine erste Relativposition zwischen Messwertaufnehmer ( 11) und Sensor (10) in Betätigungsrichtung (8) der jeweiligen Schaltschiene (5) und andererseits eine zweite Relativposition zwischen Messwertaufnehmer (11) und Sensor (10) senkrecht zur Betätigungsrichtung der jeweiligen Schaltschiene (5) erfassbar ist, und wobei eine Auswerteinrichtung (12) aus der zweiten Relativposition Systemzustände der jeweiligen Schaltgruppe (2, 3, 4) ableitet.

2. Getriebe nach Anspruch 1, **dadurch gekennzeichnet , dass** im Bereich jeder Schaltgruppe (2, 3, 4) einerseits eine erste Relativposition zwischen Messwertaufnehmer (11) und Sensor (10) in Betätigungsrichtung der jeweiligen Schaltschiene (5) und andererseits eine zweite Relativposition zwischen Messwertaufnehmer (11) und Sensor (10) senkrecht zur Betätigungsrichtung der jeweiligen Schaltschiene (5) erfassbar ist.

3. Getriebe nach Anspruch 1 oder 2, **dadurch gekennzeichnet , dass** die Auswerteinrichtung (12) aus der zweiten Relativposition eine in der jeweiligen Schaltgruppe (2, 3, 4) auf die jeweilige Schaltschiene wirkende Kraft ermittelt.

4. Getriebe nach Anspruch 3, **dadurch gekennzeichnet , dass** die Auswerteinrichtung (12) aus der zweiten Relativposition eine in der jeweiligen Schaltgruppe (2, 3, 4) wirkende Schaltkraft beim Gangeinlegen ermittelt.

5. Getriebe nach Anspruch 3 oder 4, **dadurch gekennzeichnet, dass** die Auswerteinrichtung (12) aus der zweiten Relativposition eine in der jeweiligen Schaltgruppe (2, 3, 4) wirkende Schaltkraft beim Gangauslegen ermittelt.

6. Getriebe nach einem der Ansprüche 3 bis 5, **dadurch gekennzeichnet, dass** die Auswerteinrichtung (12) auf Grundlage der in der jeweiligen Schaltgruppe (2, 3, 4) wirkenden Kraft Schaltzustände und/oder Schaltabläufe in der jeweiligen Schaltgruppe (2, 3, 4) bewertet und/oder steuert und/oder regelt und/oder adaptiert.

7. Getriebe nach einem der Ansprüche 1 bis 6, **dadurch gekennzeichnet, dass** die Auswerteinrichtung (12) aus der zweiten Relativposition in der jeweiligen Schaltgruppe (2, 3, 4) ein im Antriebsstrang wirkendes Drehmoment ermittelt.

8. Getriebe nach Anspruch 7, **dadurch gekennzeichnet , dass** die Auswerteinrichtung (12) auf Grundlage des Drehmoments Schaltzustände und/oder Schaltabläufe in der jeweiligen Schaltgruppe (2, 3, 4) bewertet und/oder steuert und/oder regelt und/oder adaptiert.

9. Getriebe nach einem der Ansprüche 1 bis 8, **dadurch gekennzeichnet, dass** die Auswerteinrichtung (12) aus der zweiten Relativposition in der jeweiligen Schaltgruppe (2, 3, 4) eine Drehrichtung einer Ausgangswelle des Getriebes und/oder eine Fahrtrichtung des Kraftfahrzeugs ermittelt.

## Claims

1. Transmission, in particular automatic shift transmission, of a motor vehicle, having at least one shift group, wherein the or each shift group comprises in each case one shift rail which actuates a shift fork of the respective shift group, which shift fork interacts with a shift element, in particular with a shift sleeve, **characterized in that** the shift rail (5) of the or each shift group (2, 3, 4) is assigned in each case one sensor (10) which can be displaced together with the respective shift rail (5) relative to a corresponding sensing element (11), wherein in the region of at least one shift group (2, 3, 4), firstly a first relative position between the sensing element (11) and sensor (10) in the actuating direction (8) of the respective shift rail (5) can be detected, and secondly a second relative position between the sensing element (11) and sensor (10) perpendicular to the actuating direction of the respective shift rail (5) can be detected, and wherein an evaluation device (12) derives system states of the respective shift group (2, 3, 4) from the second relative position.

2. Transmission according to Claim 1, **characterized in that**, in the region of each shift group (2, 3, 4), firstly a first relative position between the sensing element (11) and sensor (10) in the actuating direction of the respective shift rail (5) can be detected, and secondly a second relative position between the sensing element (11) and sensor (10) perpendicular to the actuating direction of the respective shift rail (5) can be detected.

3. Transmission according to Claim 1 or 2, **characterized in that** the evaluation device (12) determines from the second relative position a force acting on the respective shift rail in the respective shift group (2, 3, 4).

4. Transmission according to Claim 3, **characterized in that** the evaluation device (12) determines from the second relative position a shift force acting in the respective shift group (2, 3, 4) during the engagement of a gear.

5. Transmission according to Claim 3 or 4, **characterized in that** the evaluation device (12) determines from the second relative position a shift force acting in the respective shift group (2, 3, 4) during the disengagement of a gear.

6. Transmission according to one of Claims 3 to 5, **characterized in that** the evaluation device (12) evaluates and/or controls and/or regulates and/or adapts shift states and/or shift processes in the respective shift group (2, 3, 4) on the basis of the force acting in the respective shift group (2, 3, 4).

7. Transmission according to one of Claims 1 to 6, **characterized in that** the evaluation device (12) determines from the second relative position in the respective shift group (2, 3, 4) a torque acting in the drivetrain.

8. Transmission according to Claim 7, **characterized in that** the evaluation device (12) evaluates and/or controls and/or regulates and/or adapts shift states and/or shift processes in the respective shift group (2, 3, 4) on the basis of the torque.

9. Transmission according to one of Claims 1 to 8, **characterized in that** the evaluation device (12) determines from the second relative position in the respective shift group (2, 3, 4) a direction of rotation of an output shaft of the transmission and/or a direction of travel of the motor vehicle.

## Revendications

1. Transmission, en particulier transmission à changement de vitesse automatisée, d'un véhicule automobile, comprenant au moins un groupe-relais, le ou chaque groupe-relais comprenant à chaque fois une tringle de changement de vitesse qui actionne une fourchette de changement de vitesse du groupe-relais respectif coopérant avec un élément de changement de vitesse, notamment un manchon de commande, **caractérisée en ce que** la tringle de changement de vitesse (5) du ou de chaque groupe-relais (2, 3, 4) est associée à chaque fois à un capteur (10) déplaçable conjointement avec la tringle de changement de vitesse respective (5) par rapport à un détecteur de valeur de mesure (11) correspondant, où, dans la région d'au moins un groupe-relais (2, 3, 4), d'une part une première position relative entre le détecteur de valeur de mesure (11) et le capteur (10) dans la direction d'actionnement (8) de la tringle de changement de vitesse respective (5) et d'autre part une deuxième position relative entre le détecteur de valeur de mesure (11) et le capteur (10) perpendiculairement à la direction d'actionnement de la tringle de changement de vitesse respective (5), peuvent être détectées, et où un dispositif d'analyse (12) dérive de la deuxième position relative, des états du système du groupe-relais respectif (2, 3, 4).

2. Transmission selon la revendication 1, **caractérisée en ce que** dans la région de chaque groupe-relais (2, 3, 4) d'une part une première position relative entre le détecteur de valeur de mesure (11) et le capteur (10) dans la direction d'actionnement de la tringle de changement de vitesse respective (5) et d'autre part une deuxième position relative entre le détecteur de valeur de mesure (11) et le capteur (10) perpendiculairement à la direction d'actionnement de la tringle de changement de vitesse respective (5), peuvent être détectées.

3. Transmission selon la revendication 1 ou 2, **caractérisée en ce que** le dispositif d'analyse (12) détecte, à partir de la deuxième position relative, une force agissant dans le groupe-relais respectif (2, 3, 4) sur la tringle de changement de vitesse respective.

4. Transmission selon la revendication 3, **caractérisée en ce que** le dispositif d'analyse (12) détecte, à partir de la deuxième position relative, une force de changement de vitesse agissant dans le groupe-relais respectif (2, 3, 4) lors de l'enclenchement d'un rapport.

5. Transmission selon la revendication 3 ou 4, **caractérisée en ce que** le dispositif d'analyse (12) détecte, à partir de la deuxième position relative, une force de changement de vitesse agissant dans le groupe-relais respectif (2, 3, 4) dans le cas d'une sortie de rapport.

6. Transmission selon l'une quelconque des revendications 3 à 5, **caractérisée en ce que** le dispositif d'analyse (12) analyse et/ou commande et/ou régule et/ou adapte, sur la base de la force agissant dans le groupe-relais respectif (2, 3, 4), des états de changement de vitesse et/ou des déroulements de changement de vitesse dans le groupe-relais respectif (2, 3, 4).

7. Transmission selon l'une quelconque des revendications 1 à 6, **caractérisée en ce que** le dispositif d'analyse (12) détecte, à partir de la deuxième position relative dans le groupe-relais respectif (2, 3, 4), un couple agissant dans la chaîne cinématique.

8. Transmission selon la revendication 7, **caractérisée en ce que** le dispositif d'analyse (12) analyse et/ou commande et/ou régule et/ou adapte, sur la base du couple, des états de changement de vitesse et/ou des déroulements de changement de vitesse dans le groupe-relais respectif (2, 3, 4).

9. Transmission selon l'une quelconque des revendications 1 à 8, **caractérisée en ce que** le dispositif d'analyse (12) détecte, à partir de la deuxième position relative dans le groupe-relais respectif (2, 3, 4), un sens de rotation d'un arbre de sortie de la transmission et/ou un sens de conduite du véhicule automobile.
